# EUROPEAN PATENT SPECIFICATION

(11) **EP 1 977 813 B1**
(45) Date of publication and mention of the grant of the patent: **29.07.2009**
(21) Application number: 07022101.5
(22) Date of filing: 14.11.2007
(51) Int. Cl.: B01D 46/24

(54) **Honeycomb filter**
Wabenfilter
Filtre en nids d'abeilles

(30) Priority: 30.03.2007 WO PCT/JP2007/057295
(43) Date of publication of application: 08.10.2008
(73) Proprietor: IBIDEN CO., LTD., Ogaki-shi Gifu 503-8604 (JP)
(72) Inventor: Ohno, Kazushige, Ibigawacho, Ibi-gun Gifu 501-0695 (JP); Ohira, Akihiro, Ibigawacho, Ibi-gun Gifu 501-0695 (JP)
(74) Representative: HOFFMANN EITLE

(56) References cited:
- EP-A- 1 604 719
- EP-A- 1 736 219
- DE-U1-6202006 007 87

## Description

### TECHNICAL FIELD

The present invention relates to a honeycomb filter.

### BACKGROUND ART

In recent years, particulate matter (hereinafter, also referred to as "PM") such as soot contained in exhaust gases discharged from internal combustion engines of vehicles such as buses and trucks, construction machines and the like have raised serious problems as contaminants harmful to the environment and the human body. For this reason, various honeycomb filters, which use a honeycomb structured body made of porous ceramics, have been proposed as filters that capture PM in exhaust gases and purify the exhaust gases.
In a honeycomb filter of this kind, a catalyst used for purifying and/or converting exhaust gases may be supported thereon, and in this case, a catalyst supporting layer is formed in an area on which the catalyst is to be supported, so that the catalyst is supported on the catalyst supporting layer.
Patent Document 1 has disclosed a honeycomb filter made from silicon carbide, in which a higher amount of catalyst is supported on the side that allows exhaust gases to flow in (gas inlet side) and a lesser amount of catalyst is supported on the side that allows exhaust gases to flow out (gas outlet side), or a catalyst is supported only on the gas inlet side and no catalyst is supported on the gas outlet side; and an exhaust gas purifying system in which the honeycomb filter of this kind is placed in an exhaust gas passage.
Patent Document 2 has disclosed a honeycomb filter that is designed to make the amount of supported catalyst successively smaller step by step or continuously, from the gas inlet side toward the gas outlet side of the honeycomb filter.

In general, in a honeycomb filter, since the temperature in the honeycomb filter on the gas outlet side tends to become higher than the temperature in the honeycomb filter on the gas inlet side upon passage of high temperature exhaust gases, PM is sufficiently burned even when the amount of catalyst supported on the gas outlet side of the honeycomb filter is small. The honeycomb filter disclosed in each of Patent Documents 1 and 2 has been manufactured considering the phenomenon.

In the honeycomb filters disclosed in Patent Documents 1 and 2, it is possible to reduce the amount of catalyst to be supported on the gas outlet side, and consequently to cut production costs.
Moreover, by reducing the amount of catalyst to be supported, the initial pressure loss can be lowered.
Patent Document 1: JP-A 2003-154223
Patent Document 2: JP-A 2003-161138

### DISCLOSURE OF THE INVENTION

### PROBLEMS TO BE SOLVED BY THE INVENTION

Moreover, it is considered that, in general, the honeycomb filter is preferably provided with a high regeneration limit value (the maximum value of amount of captured PM which would not cause any cracks in the filter even upon burning captured PM). This is because frequent regeneration processes are required in an exhaust gas purifying system using a honeycomb filter with a low regeneration limit value, which leads to a problem of lowering fuel economy of an internal combustion engine.
Therefore, the conventional honeycomb filter needs improvement in terms of the regeneration limit value.

### MEANS FOR SOLVING THE PROBLEMS

In order to provide a honeycomb filter having a higher regeneration limit value, the inventors of the present invention have extensively conducted research efforts.
As a result, the inventors have found that, heat radiation in the end face neighborhood on the gas outlet side surely progresses when a catalyst supporting layer is not formed in the area covering at least 10% of the overall length of the honeycomb filter from the end face on the gas outlet side of the honeycomb filter and when the thermal conductivity of this area covering at least 10% is made higher than the thermal conductivity of the area of the honeycomb filter on which a catalyst supporting layer is formed. In this case, the temperature rise on the gas outlet side is suppressed, and therefore a thermal impact caused by the temperature difference between the gas inlet side and the gas outlet side of the honeycomb filter tends not to be generated, thereby achieving a high regeneration limit value in the honeycomb filter.

Moreover, in the case of supporting a catalyst on the honeycomb filter, since a reaction of gases having flowed in generates heat in the area on which the catalyst is supported, the calorific value in the area on which the catalyst is supported becomes greater than that of the area on which the catalyst is not supported. Here, when the area on which the catalyst is supported is too narrow, a large amount of heat is generated in the narrow area. Further, since the area with the catalyst supporting layer being formed therein has a lower thermal conductivity compared to the area with the catalyst supporting layer being not formed therein, the area is in a state that hardly causes heat radiation.
For this reason, when the catalyst supporting layer having a catalyst supported thereon is formed in a narrow area, the temperature difference between the corresponding area and the other areas becomes very large, with the result that a greater thermal impact is applied onto the honeycomb filter.
In contrast, the inventors of the present invention have found that, by forming the catalyst supporting layer in the area covering 25% or more of the overall length of the honeycomb filter out of the area covering 90% of the overall length of the honeycomb filter from the end face on the gas inlet side, it is possible to prevent the generation of a large amount of heat within a narrow area, and consequently to prevent a great thermal impact from being applied onto the honeycomb filter, thereby achieving a high regeneration limit value in the honeycomb filter.

Furthermore, with respect to the honeycomb filter with the catalyst supporting layer being formed only in the predetermined area as described above, the inventors of the present invention have observed a state of the honeycomb filter after capturing PM. Then, surprisingly, a phenomenon has been confirmed in which more PM had been captured on the gas outlet side compared to those on the gas inlet side.

As indicated by the results of the observation, it is considered that carrying out a regeneration process on a honeycomb filter with more PM accumulated on the gas outlet side of the honeycomb filter makes the temperature on the gas outlet side higher than the temperature on the gas inlet side; therefore, the temperature difference between the gas inlet side and the gas outlet side of the honeycomb filter becomes greater, with the result that the thermal impact to be applied to the honeycomb filter becomes greater and cracks are easily generated.
From this point of view, it is presumed that more PM being accumulated on the gas outlet side of the honeycomb filter causes a reduction in the regeneration limit value of the honeycomb filter.

Based upon these, the inventors of the present invention have found that, in order to increase the regeneration limit value of the honeycomb filter, the honeycomb filter should have a structure in which PM is captured as uniformly as possible from the gas inlet side toward the gas outlet side of the honeycomb filter by preventing much PM from being captured by cell walls at the gas inlet side, and have completed the present invention.

That is, the honeycomb filter according to claim 1 is a honeycomb filter comprising a pillar-shaped honeycomb fired body having a large number of cells each sealed at either end thereof and placed longitudinally in parallel with one another with a cell wall therebetween, and allowing gases to flow into one of the end face sides and to flow out from the other end face side, wherein the sum of the cross sectional areas perpendicular to the longitudinal direction of cells having openings on the gas inlet side is 1.5 to 3.0 times larger than the sum of the cross sectional areas perpendicular to the longitudinal direction of cells having openings on the gas outlet side; no catalyst supporting layer is formed in an area covering 10% of the overall length of the honeycomb filter from the gas outlet side; a catalyst supporting layer is formed in an area covering 25 to 90% of the overall length of the honeycomb filter in an area of 90% of the overall length from the gas inlet side; and a thermal conductivity of the area in which no catalyst supporting layer is formed is higher than a thermal conductivity of the area in which the catalyst supporting layer is formed in the honeycomb filter.

In the honeycomb filter according to claim 1, the sum of areas of cross sections perpendicular to the longitudinal direction of cells having openings on the gas inlet side (hereinafter, referred to as "gas inlet cell") is 1.5 to 3.0 times larger than the sum of areas of cross sections perpendicular to the longitudinal direction of cells having openings on the gas outlet side (hereinafter, referred to as a "gas outlet cell"). Due to this structure, when gases are flown into a honeycomb structured body, the flow rate of the gases flowing through the gas inlet cells tends to be made slower than the flow rate of gases flowing through the gas outlet cells. Hereinafter, the area of cross sections perpendicular to the longitudinal direction of cells is referred to simply as "cross sectional area."
Therefore, in comparison with a honeycomb filter in which the sum of the cross sectional areas of the gas inlet cells is virtually the same as the sum of the cross sectional areas of the gas outlet cells, exhaust gases containing particulates matter (PM) more easily pass through the cell walls on the gas inlet side of the honeycomb filter so that the amount of PM captured on the gas inlet side of the honeycomb filter becomes greater; thus, PM is easily captured uniformly from the gas inlet side toward the gas outlet side of the honeycomb filter.

When, as described above, PM tends to be captured uniformly from the gas inlet side toward the gas outlet side of the honeycomb filter without being captured in a higher proportion at the gas outlet side of the honeycomb filter, the temperature difference between the gas inlet side and the gas outlet side of the honeycomb filter upon burning PM (upon conducting a regenerating process) becomes small, and thus occurrence of cracks tends to be reduced in the honeycomb filter in the regeneration process. For this reason, the honeycomb filter according to claim 1 is provided with a high regeneration limit value.

In contrast, when the sum of the cross sectional areas of the gas inlet cells is less than 1.5 times larger than the sum of the cross sectional areas of the gas outlet cells, the flow rate of PM flowing through the gas inlet cells is not reduced sufficiently, and PM tends to be unevenly captured in a higher proportion on the gas outlet side of the honeycomb filter, and the regeneration limit value tends to be reduced.
On the other hand, in the case where the sum of the cross sectional areas of the gas inlet cells is more than 3.0 times larger than the sum of the cross sectional areas of the gas outlet cells, since this structure makes it difficult for gases to flow from the gas inlet cells toward the gas outlet cells, PM tends to be unevenly captured, and as a result, the regeneration limit value tends to be reduced.

Furthermore, in the honeycomb filter according to claim 1, no catalyst supporting layer is formed in an area covering 10% of the overall length of the honeycomb filter from the end face on the gas outlet side of the honeycomb filter, and the thermal conductivity of the area provided with no catalyst supporting layer in the honeycomb filter becomes higher than the thermal conductivity of an area provided with a catalyst supporting layer in the honeycomb filter.
Since the area of 10% of the overall length of the honeycomb filter from the end face on the gas outlet side is made to include an area formed by a material having a high thermal conductivity, it is possible to accelerate heat radiation from the end face neighborhood on the gas outlet side. Consequently, the temperature rise of the honeycomb filter on the gas outlet side is prevented from occurring, and therefore a thermal impact, which is caused by the temperature difference between the gas inlet side and the gas outlet side of the honeycomb filter, hardly occurs, making it possible to provide a honeycomb filter having a high regeneration limit value.

Moreover, in the case where a catalyst is supported, heat is generated due to reaction of the gas, and thus the heating value of the area on which the catalyst is supported becomes higher than the other area on which no catalyst is supported. Furthermore, since the area in which the catalyst supporting layer is formed has a lower thermal conductivity than the area on which no catalyst supporting area is formed, heat radiation hardly occurs therein. For this reason, in the case where the area on which the catalyst is supported is too narrow, a large quantity of heat is generated in the narrow area to cause a larger temperature difference between the area in which the catalyst is supported on the catalyst supporting layer and the other area in which no catalyst supporting layer is formed, resulting in a larger thermal impact to be applied to the honeycomb filter.
In contrast, when the catalyst supporting layer is formed in an area covering 25% or more of the overall length of the honeycomb filter from the end face on the gas inlet side as in the case of the honeycomb filter according to claim 1, since, upon supporting the catalyst, the area supporting the catalyst is not too narrow, the temperature difference between the area in which the catalyst is supported on the catalyst supporting layer and the other area in which no catalyst layer is formed does not become too large, and therefore a honeycomb filter having a high regeneration limit value is obtained.

As mentioned above, the honeycomb filter according to claim 1 is formed in such a manner that the ratio of the sum of the cross sectional areas of the gas inlet cells and the sum of the cross sectional areas of the gas outlet cells is set at a predetermined ratio, and also the catalyst supporting layer is formed on a predetermined area. For this reason, the honeycomb filter according to claim 1 is allowed to have a high regeneration limit value.

In the honeycomb filter according to claim 2, a catalyst is supported on the catalyst supporting layer.
In the honeycomb filter according to claim 2, a toxic component in exhaust gases can be purified and/or converted by the catalyst supported on the catalyst supporting layer.

In the honeycomb filter according to claim 3, the thermal conductivity of the area in which no catalyst supporting layer is formed is 1.3 to 5.0 times higher than the thermal conductivity of the area in which the catalyst supporting layer is formed in the honeycomb filter.

In the honeycomb filter according to claim 3, since the thermal conductivity of the area in which no catalyst supporting layer is formed is 1.3 to 5.0 times higher than the thermal conductivity of the area in which the catalyst supporting layer is formed, it is possible to reduce occurrence of a thermal impact due to temperature differences between the gas inlet side and the gas outlet side of the honeycomb filter. Accordingly, the honeycomb filter according to claim 3 is provided with a higher regeneration limit value.

In the honeycomb filter according to claim 4, a main component thereof includes one member selected from the group consisting of a carbide ceramic, a nitride ceramic, a complex of a metal and a carbide ceramic, and a complex of a metal and a nitride ceramic.
Moreover, in the honeycomb filter according to claim 5, a main component thereof includes silicon carbide.
Since any of the above-mentioned materials for the main component of the honeycomb filter has a high thermal conductivity, the honeycomb filters according to claim 4 and claim 5 are provided with an extremely high regeneration limit value.

### BEST MODE FOR CARRYING OUT THE INVENTION

### (First Embodiment)

The following description will discuss a first embodiment which is one of the embodiments of the present invention.

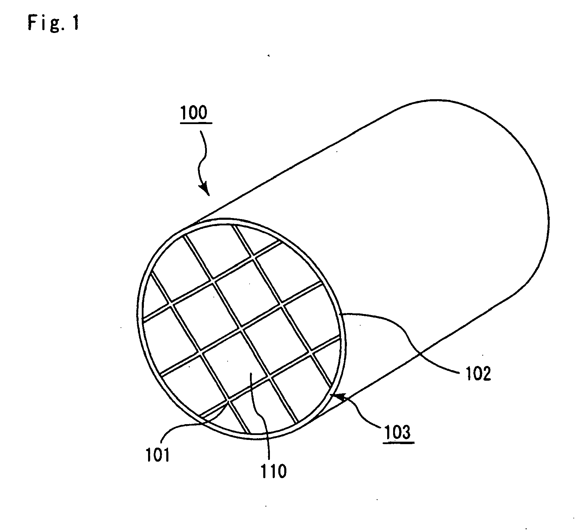

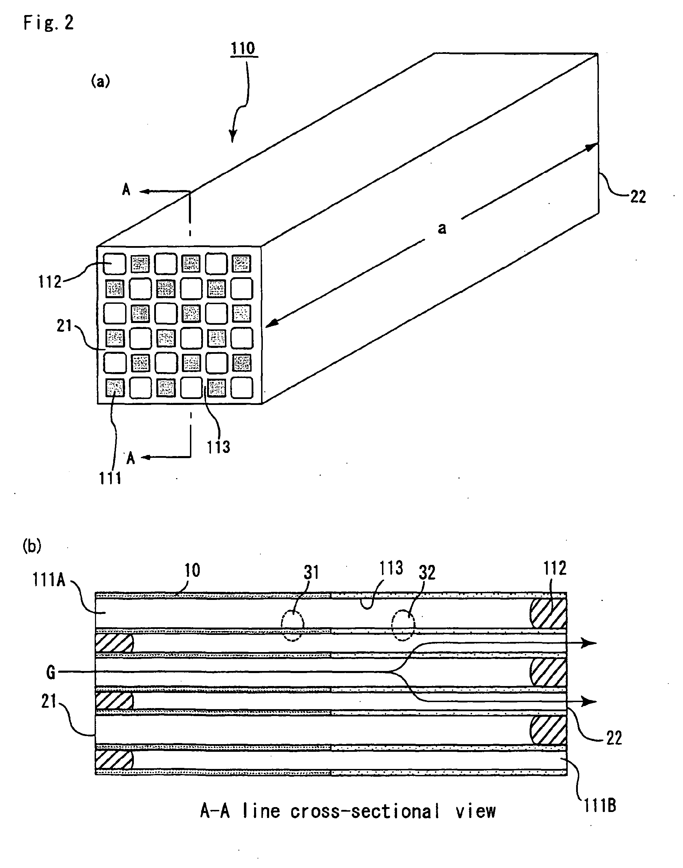

Fig.1 is a perspective diagram schematically showing an example of the honeycomb filter of the present invention. Fig. 2 (a) is a perspective diagram schematically showing one example of the honeycomb fired body forming the honeycomb filter of the present invention, and Fig. 2 (b) is a cross-sectional view taken along the line A-A in the Fig. 2(a).

In a honeycomb filter 100, a plurality of honeycomb fired bodies as shown in Fig. 2(a) and Fig. 2(b) are combined with one another by interposing sealing material layers (adhesive layers) 101 in between to configure a ceramic block 103, and a sealing material layer (coat layer) 102 is formed on the outer periphery of the ceramic block 103.

The honeycomb fired body 110 includes porous silicon carbide as a main component, and is formed by a large number of cells 111A, 111B which are placed in parallel with one another in a longitudinal direction (the direction shown by an arrow a in Fig. 2 (a)) with a cell wall 113 therebetween, and the cells 111A, 111B are each sealed with a plug 112 at either end thereof. More specifically, the cells 111A are sealed at the end portion on the outlet side of exhaust gases G, and the cells 111B are sealed at the end portion on the inlet side of exhaust gases G. Here, the shape of the cross section perpendicular to the longitudinal direction of the each of the cells 111A is an octagonal shape, and the shape of the cross section perpendicular to the longitudinal direction of the each of the cells 111B is a tetragonal shape.
Moreover, the area of the cross section perpendicular to the longitudinal direction of the cells 111A is 1.5 times larger than the cross sectional area perpendicular to the longitudinal direction of the cells 111B. Here, in the honeycomb fired body 110, the number of the cells 111A and the number of the cells 111B are same.
Therefore, in the honeycomb filter 100 having a plurality of honeycomb fired bodies 110 combined with one another, the sum of the cross sectional areas of the cells having openings on the inlet side of exhaust gases G is 1.5 times larger than the sum of the cross sectional areas of the cells having openings on the outlet side of exhaust gases G.

Further, in the honeycomb fired body 110, as shown in Fig. 2 (b), exhaust gases G which have flowed into cells 111A having an opening at an end face 21 on the gas inlet side are allowed to flow out from other cells 111B having an opening at an end face 22 on the gas outlet side, after surely passing through cell walls 113 separating the cells.
As a result, in the honeycomb fired body 110 (honeycomb filter 100), the cell walls 113 function as a filter for capturing PM and the like.

Moreover, in the honeycomb filter 100, a catalyst supporting layer 10, which includes an alumina having a platinum (Pt) catalyst supported thereon, is formed at a predetermined area of the honeycomb filter 100. As a result, the thermal conductivity of areas where the catalyst supporting layer 10 is not formed in the honeycomb filter 100 becomes higher than the thermal conductivity of the area where the catalyst supporting layer 10 is formed in the honeycomb filter 100.
Furthermore, the catalyst supported on the catalyst supporting layer makes it possible to accelerate conversion of toxic components in exhaust gases and burning of PM.

Referring to Figures, the following description will discuss the predetermined area in which the catalyst supporting layer is formed.

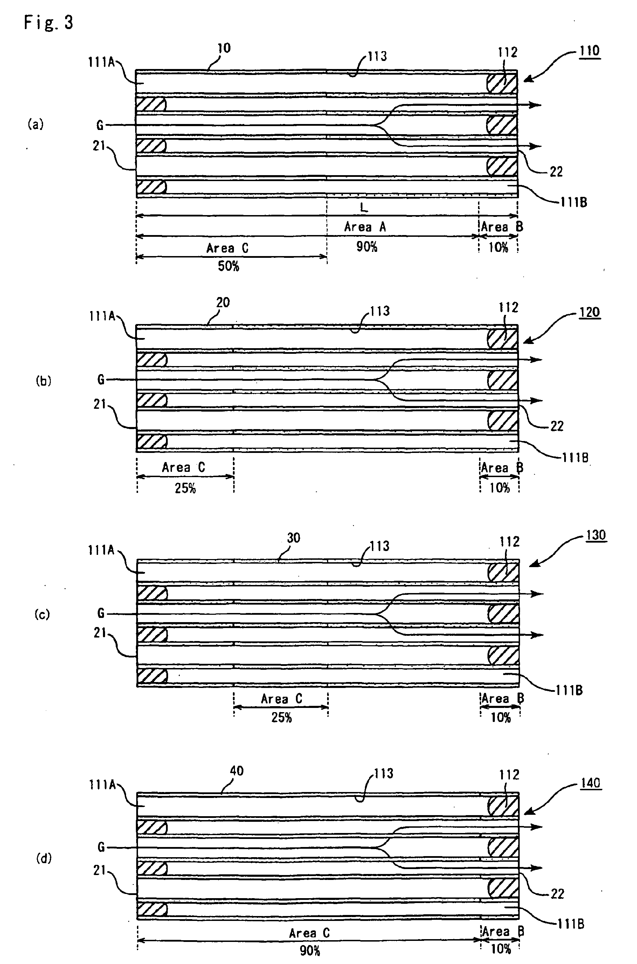

Figs. 3(a) to 3(d) each is a cross-sectional view schematically showing an example of a honeycomb fired body with a catalyst supporting layer being formed in a predetermined area.
More specifically, in the honeycomb fired body shown in Fig. 3(a), a catalyst supporting layer is formed in the area covering 50% of the overall length L of the honeycomb fired body from the end face 21 on the gas inlet side; in the honeycomb fired body shown in Fig. 3(b), a catalyst supporting layer 20 is formed in the area covering 25% of the overall length L of the honeycomb fired body from the end face 21 on the gas inlet side; in the honeycomb fired body shown in Fig. 3 (c), a catalyst supporting layer 30 is formed in the area covering 25 to 50% of the overall length L of the honeycomb fired body from the end face 21 on the gas inlet side; and in the honeycomb fired body shown in Fig. 3 (d), a catalyst supporting layer 40 is formed in the area covering 90% of the overall length L of the honeycomb fired body from the end face 21 on the gas inlet side.
Here, the overall length of the honeycomb filter is equal to the overall length of the honeycomb fired body.

In each of the honeycomb fired bodies 110, 120, 130, and 140 shown in Figs. 3(a) to 3(d), respectively, no catalyst supporting layer is formed in the area covering 10% of the overall length L of the honeycomb fired body from the end face 22 on the gas outlet side (area B in Figs. 3(a) to 3(d)). Moreover, out of the area covering 90% of the overall length L of the honeycomb fired body from the end face 21 on the gas inlet side (area A in Fig. 3(a)), a catalyst supporting layer is formed in the area covering 25% to 90% (area C in Figs. 3 (a) to 3(d)) of the overall length L of the honeycomb fired body.

The area C in which the catalyst supporting layer is formed may be provided continuously from the end face 21 on the gas inlet side as shown in Figs. 3(a), 3(b), and 3(d), or alternatively, this area may be provided continuously from a position apart from the end face 21 on the gas inlet side as shown in Fig. 3(c).
The catalyst supporting layer is formed inside the cell walls 113 in the honeycomb fired bodies shown in Figs. 3(a), 3(b), 3(c) and 3(d), or alternatively, the catalyst supporting layer may be formed on the surface of the cell walls 113.

Hereinafter, the following description will discuss the manufacturing methods of a honeycomb filter in which the catalyst supporting layer of the present invention is formed.
(1) Mixed powder is prepared as a ceramic material by dry-mixing a silicon carbide powder and an organic binder, which have a different particle diameter, and concurrently a liquid plasticizer, a lubricant, and water are mixed together to prepare a mixed liquid. Then, the mixed powder and the mixed liquid are mixed by using a wet mixing apparatus so that a wet mixture for manufacturing a molded body is prepared.
(2) The wet mixture is loaded into an extrusion-molding machine, and the wet mixture is extrusion-molded so that a honeycomb molded body having a predetermined shape is manufactured. Here, an extrusion-molding die is properly selected so that the respective cells have predetermined shapes.
   Moreover, after the honeycomb molded body has been cut into a predetermined length, the resulting honeycomb molded body is dried by using a drying apparatus, thereby the honeycomb molded body having virtually the same shape as the honeycomb fired body shown in Figs. 2(a) and 2(b) is formed.
(3) Furthermore, predetermined end portions of each of the cells are filled in with a predetermined amount of a plug material paste to be formed into plugs so that the respective cells are sealed. Upon sealing the cells, the plug material paste is filled into only cells which need to be sealed, by placing a mask for sealing on the end face of the honeycomb molded body.
(4) The honeycomb molded body with either one of end portions of each cell sealed is heated in a degreasing furnace so as to carry out the degreasing process for decomposing and removing organic substances in the honeycomb molded body, thereby a honeycomb degreased body is manufactured.
   Next, the honeycomb degreased body is placed in a firing furnace to carry out a firing process at a predetermined temperature (for example, at a temperature of 2200 to 2300°C) so that a honeycomb fired body is manufactured.
(5) A plug material paste is applied to a side face of the honeycomb fired body to form a sealing material layer (adhesive layer) thereon, and another honeycomb fired body is successively laminated with this plug material paste layer interposed therebetween. By repeating these processes, an aggregated body of a predetermined number of honeycomb fired bodies which are combined with one another is manufactured. Here, with respect to the plug material paste, a material made from an inorganic binder, an organic binder, and inorganic fibers and/or inorganic particles may be used.
(6) The aggregated body of honeycomb fired bodies is heated so that the plug material paste layers are dried and solidified to form sealing material layers (adhesive layers). Thereafter, a cutting process is carried out on the aggregated body of honeycomb fired bodies by using a diamond cutter or the like to form a ceramic block, and the plug material paste is applied to a peripheral face of the ceramic block, then dried and solidified to form a sealing material layer (coat layer), thereby a honeycomb filter is manufactured.
(7) A catalyst supporting layer made from alumina is formed in a predetermined area of the honeycomb filter, and a platinum catalyst is supported on the catalyst supporting layer. More specifically, the following processes (a) and (b) are carried out.
   (a) The honeycomb filter is immersed in an alumina solution containing alumina particles with the face to be the end face on the gas inlet side facing down, so that the predetermined area, in which the catalyst supporting layer is to be formed, is immersed in the alumina solution; thus, the alumina particles are adhered to the predetermined area of the honeycomb filter.
      Then, the honeycomb filter is dried at 110 to 200°C for two hours, and the dried honeycomb filter is heated and fired at 500 to 1000°C so that the catalyst supporting layer is formed in the predetermined area of the honeycomb filter.
   (b) Next, the honeycomb filter is immersed into a solution of a metal compound containing platinum, with the face to be the end face on the gas inlet side facing down, so that the predetermined area in which the catalyst supporting layer is formed is immersed in the alumina solution, and the immersed honeycomb filter is dried. Then, the dried honeycomb filter is heated and fired at 500 to 800°C under an inert atmosphere, so that a catalyst is supported on the catalyst supporting layers.

Here, in the methods shown in the processes (a) and (b), the catalyst supporting layer is continuously formed from the end face on the gas inlet side of the honeycomb filter, and the catalyst is supported on this catalyst supporting layer.
However, in a case where, as shown in Fig. 3(c), the catalyst supporting layer is to be continuously formed from a position apart from the end face on the gas inlet side of the honeycomb filter, and the catalyst is to be supported on this catalyst supporting layer, for example, the following method may be used.
Namely, prior to carrying out the process (a), an area on the gas inlet side of the honeycomb filter, in which the catalyst supporting layer is not to be formed, is coated with silicone resin, and those processes up to the drying process of the process (a) are carried out by using alumina particles with a platinum catalyst having been preliminarily applied. Then, the area is further heated to about 300°C so that the silicone resin is fused and removed therefrom; successively, after the heating and firing processes of the process (a) are carried out, the residual silicone resin on the honeycomb filter is dissolved and removed therefrom by using an acid.

Functional effects of the honeycomb filter of the present embodiment are enumerated in the following.
(1) Since the sum of the cross sectional areas of the gas inlet cells is larger than the sum of the cross sectional areas of the gas outlet cells, or more specifically, the sum of the cross sectional areas of the gas inlet cells is 1.5 times larger than the sum of the cross sectional areas of the gas outlet cells, particulate matter (PM) is easily captured evenly on the cell walls so that the honeycomb filter of the present embodiment is allowed to have a higher regeneration limit value.
   Presumably, this effect is obtained because the flow rate of exhaust gases flowing through the gas inlet cells becomes slower in comparison with the flow rate of exhaust gases of a honeycomb filter in which the sum of the cross sectional areas of the gas inlet cells and the sum of the cross sectional areas of the gas outlet cells are the same.
(2) Since no catalyst supporting layer is formed in an area covering 10% of the overall length of the honeycomb filter from the end face on the gas outlet side, and since the area has a higher thermal conductivity than an area on which the catalyst supporting layer is formed, the end face neighborhood on the gas inlet side is superior in heat radiating property. For this reason, upon carrying out a regenerating process, a thermal impact, which is caused by the temperature difference between the gas inlet side and the gas outlet side of a honeycomb filter, hardly occurs so that the resulting honeycomb filter is allowed to have a high regeneration limit value.
(3) Since the catalyst supporting layer with a catalyst supported thereon is formed in an area covering 25% or more of the overall length of the honeycomb filter, the area on which the catalyst is supported is sufficiently large. Therefore, in the regeneration process, it is possible to prevent a large amount of heat from being generated within a narrow area in the honeycomb filter, and it becomes possible to achieve a high regeneration limit value.

The following description will discuss examples which more specifically disclose the first embodiment of the present invention; however, the present invention is not limited to those examples.

### (Example 1)

### (Manufacturing of honeycomb filter)

An amount of 52.8% by weight of coarse powder of silicon carbide having an average particle diameter of 22 µm and an amount of 22.6% by weight of fine powder of silicon carbide having an average particle diameter of 0.5 µm were wet-mixed. To the resulting mixture, 2.1% by weight of acrylic resin, 4.6% by weight of an organic binder (methylcellulose), 2.8% by weight of a lubricant (UNILUB, made by NOF Corporation), 1.3% by weight of glycerin, and 13.8% by weight of water were added, and then kneaded to prepare a material composition.
Then, the material composition extrusion molded so that a raw honeycomb molded body having virtually the same cross sectional shape as the cross sectional shape shown in Fig. 2 (a) was manufactured.

Next, the raw honeycomb molded body was dried by using a microwave drying apparatus to obtain a dried body of the honeycomb molded body. Thereafter, a plug material paste having the same composition as the material composition was filled into predetermined cells, and then again dried by a drying apparatus.

The dried honeycomb molded body was degreased at 400°C, and then fired at 2200°C under normal pressure argon atmosphere for 3 hours so as to manufacture a honeycomb fired body formed by a silicon carbide sintered body with a porosity of 45%, an average pore diameter of 15 µm, a size of 34.3 mm X 34.3 mm X 150 mm, the number of cells (cell density) of 46.5 pcs/cm² (300/inch²) and a thickness of the cell wall of 0.3 mm, in which the cross sectional shape of the gas inlet cells was an octagonal shape, the shape of the gas outlet cells was a tetragonal shape, and the sum of the cross sectional areas of the gas inlet cells is 1.5 times larger than the sum of the cross sectional areas of the gas outlet cells.

### (Manufacturing of honeycomb filter)

A large number of honeycomb fired bodies were bonded to one another by using a heat resistant plug material paste containing 30% by weight of alumina fibers having an average fiber length of 20 µm, 21% by weight of silicon carbide particles having an average particle diameter of 0.6 µm, 15% by weight of silica sol, 5.6% by weight of carboxymethyl cellulose, and 28.4% by weight of water. The bonded honeycomb fired bodies were dried at 120°C, and then cut by using a diamond cutter so that a round pillar-shaped ceramic block having the sealing material layer (adhesive layer) with a thickness of 1.0 mm was manufactured.

Next, a plug material paste layer having a thickness of 0.2 mm was formed on the peripheral portion of the ceramic block by using the plug material paste. Further, this plug material paste layer was dried at 120°C so that a round pillar-shaped honeycomb filter having a size of 143.8 mm in diameter X 150 mm in length, with a sealing material layer (coat layer) formed on the periphery thereof, was manufactured.

### (Forming of catalyst supporting layer)

γ-alumina particles were mixed with a sufficient amount of water, and stirred to form an alumina slurry. A honeycomb filter was immersed in this alumina slurry up to an area covering 50% of its overall length, with its end face on the gas inlet side facing down, and maintained in this state for one minute.
Next, this honeycomb filter was heated at 110°C for one hour to be dried, and further fired at 700°C for one hour so that a catalyst supporting layer was formed in the area covering 50% of its overall length from the end face on the gas inlet side of the honeycomb filter.
At this time, the immersing process into the alumina slurry, drying process, and firing process were repeatedly carried out so that the amount of formation of the catalyst supporting layer became 40 g per 1 liter volume of the area with the catalyst supporting layer being formed in the honeycomb filter.

### (Supporting of platinum catalyst)

The honeycomb filter was immersed in diammine dinitro platinum nitric acid ([Pt(NH₃)₂(NO₂)₂] HNO₃, platinum concentration of 4.53% by weight) up to an area covering 50% of its overall length, with its end face on the inlet side of the honeycomb filter facing down and maintained in this state for one minute.
Next, the honeycomb filter was dried at 110°C for two hours, and further fired at 500°C for one hour under a nitrogen atmosphere so that a platinum catalyst was supported on the catalyst supporting layer.
The amount of the catalyst to be supported was decided in such a manner that 3 g of platinum was supported relative to 20 g of alumina of the catalyst supporting layer.
By carrying out the aforementioned process, a honeycomb filter in which a catalyst supporting layer including alumina was formed in the area covering 50% of the overall length of the honeycomb filter from the end face at a gas inlet side, and a platinum catalyst was supported on the catalyst supporting layer.

### (Examples 2 to 4)

The honeycomb filters were manufactured in the same manner as in Example 1. After that, upon forming a catalyst supporting layer, the depth to which each honeycomb filter was immersed in the slurry was changed to manufacture honeycomb filters in which the catalyst supporting layer was formed in the area shown in Table 1 (Example 2: area of 0 to 25%, Example 3: area of 25 to 50%; Example 4: area of 0 to 90%, each from the end face on the gas inlet side).
At this time, the concentration of alumina slurry was adjusted so that the amount of formation of each catalyst supporting layer per volume (1 liter) of the area in which the catalyst supporting layer was formed in the honeycomb filter was set to each of values shown in Table 1.
In this case, the amount of formation was designed so that the amount of formation of the catalyst supporting layer became 20 g per volume (1 liter) of the entire honeycomb filter.

In Example 3, as shown in Fig. 3(c), a catalyst supporting layer was formed in the area covering 25% of the overall length of the honeycomb filter, ranging from a position corresponding to 25% to a position corresponding to 50% of the overall length of the honeycomb filter from the end face on the gas inlet side of the honeycomb filter.
After the area covering 25% of the overall length of the honeycomb filter from the end face of the gas inlet side of the honeycomb filter had been coated with silicone resin, the honeycomb filter was immersed in an alumina slurry from the end face of the gas inlet side of the honeycomb filter to a position corresponding to 50% of the overall length of the honeycomb filter.
Next, a drying process was carried out at 110°C for one hour, and further the honeycomb filter was heated to 300°C so that the silicone resin was fused and removed. Thereafter, the honeycomb filter was fired at 700°C so that a catalyst supporting layer with the catalyst being supported thereon was formed, and lastly, the residual silicone resin was dissolved by using 1% hydrochloric acid.
As shown in Fig. 3(b), by using the above-described processes, a catalyst supporting layer was formed in which the catalyst was supported on the area covering 25% of the overall length of the honeycomb filter, ranging from a position corresponding to 25% to a position corresponding to 50% of the overall length of the honeycomb filter from the end face on the gas inlet side of the honeycomb filter.

### (Comparative Examples 1 and 2)

The honeycomb filters were manufactured in the same manner as in Example 1. After that, upon forming a catalyst supporting layer, the depth to which each honeycomb filter was immersed in the slurry was changed to manufacture honeycomb filters in which the catalyst supporting layer was formed in the area shown in Table 1 (Comparative Example 1: area of 0 to 20% from the end face on the gas inlet side, Comparative Example 2: the entire area).
At this time, the concentration of alumina slurry was adjusted so that the amount of formation of each catalyst supporting layer per volume (1 liter) of the area in which the catalyst supporting layer was formed in the honeycomb filter was set to each of values shown in Table 1.
In this case, the amount of formation was designed so that the amount of formation of the catalyst supporting layer became 20 g per volume (1 liter) of the entire honeycomb filter.

### (Measurement of thermal conductivity)

With respect to each of the honeycomb filters manufactured in Examples 1 to 4, and Comparative Examples 1 and 2, one portion of cell walls of the honeycomb filter (for example, a portion surrounded by a broken line in Fig. 2(b)) was cut out to form a thermal conductivity-measuring portion 31 on the gas inlet side and a thermal conductivity-measuring portion 32 on the gas outlet side, and the thermal conductivity of each of cell walls on the respective thermal conductivity-measuring portions was measured by using a laser flash method.
The results of the measurements are as shown in Table 1.

### (Measurements of regeneration limit value)

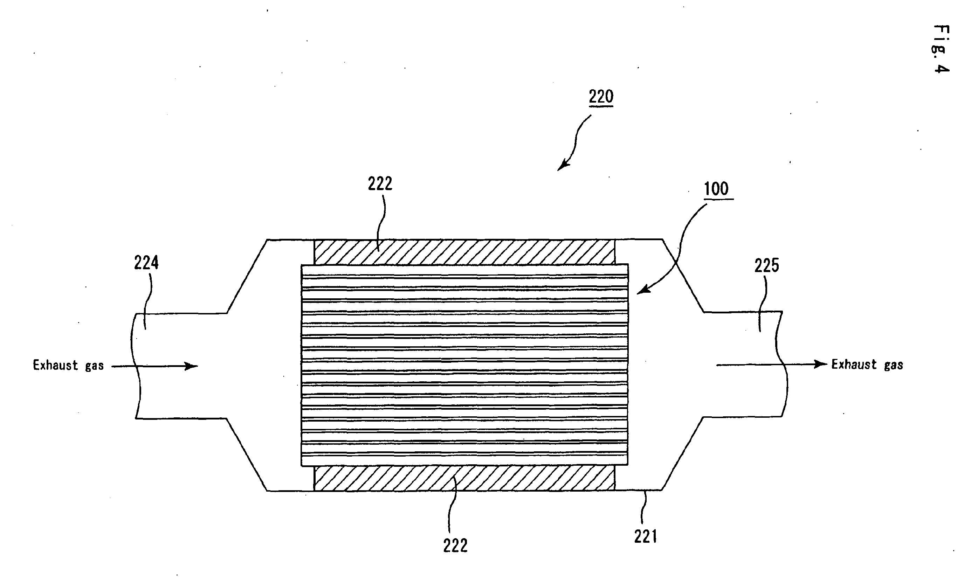

A regeneration value of each of the honeycomb filters manufactured in Examples 1 to 4 and Comparative Examples 1 and 2 was measured. Here, the measurements were carried out by using an exhaust gas purifying apparatus in which a honeycomb filter as shown in Fig. 4 was disposed at an exhaust passage of an engine.
An exhaust gas purifying apparatus 220 was mainly configured with a honeycomb filter 100, a casing 221 that covers the outside of the honeycomb filter 100 and a holding sealing material 222 interposed between the honeycomb filter 100 and the casing 221, and an introducing pipe 224, which was coupled to an internal combustion engine such as an engine, was connected to the end portion of the casing 221 on the side from which exhaust gases were introduced, and an exhaust pipe 225 coupled to the outside was connected to the other end portion of the casing 221. Here, in Fig. 4, arrows show flows of exhaust gases.
The engine was driven at the number of revolutions of 3000 min⁻¹ and a torque of 50 Nm for a predetermined period of time so that a predetermined amount of PM was captured. Thereafter, the engine was driven in full load at the number of revolutions of 4000 min⁻¹, and at the time when the filter temperature had become constant at about 700°C, the engine was driven slowly at the number of revolutions of 1050 min⁻¹ and a torque of 30 Nm so that PM was forcefully burned.
Then, this experiment was carried out in which a regenerating process was executed while the amount of captured PM was being changed so that whether or not any crack occurred in the filter was examined. Here, the maximum amount of PM without causing any cracks was defined as the regeneration limit value.

Table 1 collectively shows the results of measurements of: the cell shape; the cell wall thickness, the formation range, the formation position and the amount of formation of the catalyst supporting layer; the thermal conductivity; and the regeneration limit value, of each of honeycomb filters manufactured in Examples 1 to 4 and Comparative Examples 1 and 2.
Here, the formation position of the catalyst supporting layer is represented by the position (%) from the gas inlet side relative to the overall length of the honeycomb filter, given that the position of the end face on the gas inlet side is 0% and that the position of the end face on the gas outlet side is 100%. In Example 1, since the catalyst supporting layer is formed in an area of 50% from the end face on the gas inlet side, the formation position is given as "0 to 50".
Moreover, the amount of formation of the catalyst supporting layer is indicated by the amount of formation per volume (1 liter) of the area of the honeycomb filter on which the catalyst supporting layer is formed.

**[Table 1]**

| | Cell Shape | | Cell wall thickness | Catalyst supporting layer on inlet side | | | Thermal conductivity (W/mK) | | | Regeneration limit value (g/L) |
|---|---|---|---|---|---|---|---|---|---|---|
| | Cross-sectional shape | Cross sectional area ration (Note 1) | (mm) | Formation range (%) | Formation position (%) | Amount of formation (g/L) | Inlet side | Outlet side | Ratio | |
| Example 1 | Octagonal shape + Tetragonal shape | 1.5 | 0.3 | 50 | 0-50 | 90.0 | 9.7 | 16.9 | 1.7 | 6.6 |
| Example 2 | Octagonal shape + Tetragonal shape | 1.5 | 0.3 | 25 | 0-25 | 80.0 | 6.0 | 16.9 | 2.8 | 6.0 |
| Example 3 | Octagonal shape + Tetragonal shape | 1.5 | 0.3 | 25 | 25-50 | 80.0 | 6.0 | 16.9 | 2.8 | 6.0 |
| Example 4 | Octagonal shape + Tetragonal shape | 1.5 | 0.3 | 90 | 0-90 | 22.2 | 12.0 | 16.9 | 1.4 | 6.4 |
| Comparative Example 1 | Octagonal shape + Tetragonal shape | 1.5 | 0.3 | 20 | 0-20 | 100.0 | 5.3 | 16.9 | 3.2 | 3.6 |
| Comparative Example 2 | Octagonal shape + Tetragonal shape | 1.5 | 0.3 | 100 | 0-100 | 20.0 | 12.5 | - | - | 3.0 |

| | | | | | | | | | | |
|---|---|---|---|---|---|---|---|---|---|---|
| (Note 1) Cross sectional area ratio = Cross sectional area of gas inlet cells / Cross sectional area of gas outlet cells | | | | | | | | | | |

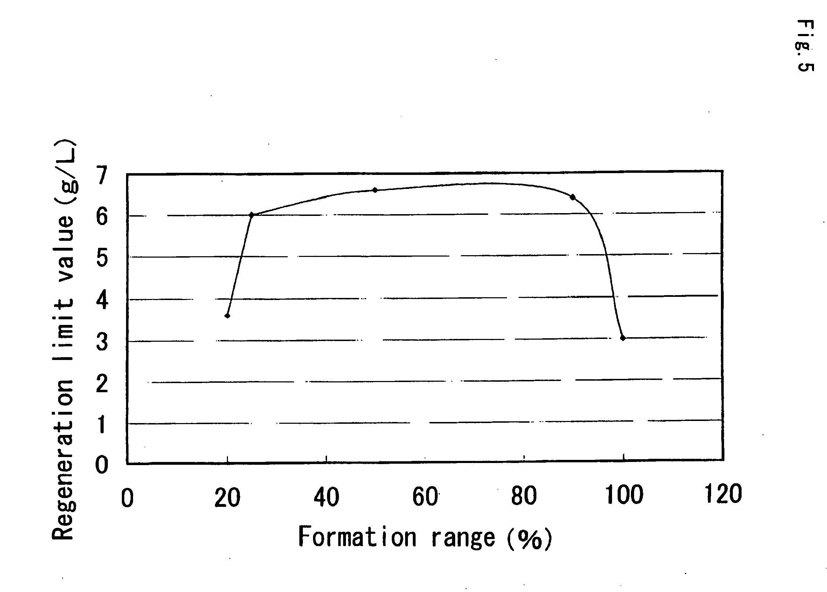

Fig. 5 is a graph that shows the relationship between the formation range of a catalyst supporting layer and the regeneration limit value with respect to each of honeycomb filters manufactured in Examples 1 to 4 and Comparative Examples 1 and 2.
As clearly indicated by the results shown in Table 1 and Fig. 5, by forming a catalyst supporting layer in an area covering 25% or more of the overall length of the honeycomb filter in the area of 90% of the overall length of the honeycomb filter from the end face on the gas inlet side, the regeneration limit value can be set to as high as 6.0 g/L or more. In contrast, in the case where the formation range of the catalyst supporting layer is as low as 20% (Comparative Example 1), or in the case where the catalyst supporting layer is formed over the entire honeycomb filter (Comparative Example 2), the regeneration limit value is reduced.

### (Example 5)

A honeycomb filter in which a platinum catalyst was supported on a catalyst supporting layer was manufactured in the same manner as in Example 1, except that a die was changed upon carrying out extrusion molding so as to manufacture a honeycomb fired body in which the cross sectional area of gas inlet cells was 2.3 times larger than the cross sectional area of gas outlet cells in Example 1.

### (Examples 6 to 8)

The honeycomb filters were manufactured in the same manner as in Example 5. After that, upon forming a catalyst supporting layer, the depth to which each honeycomb filter was immersed in the slurry was changed to manufacture a honeycomb filter in which the catalyst supporting layers were formed on the respective areas shown in Table 2 (Example 6: area of 0 to 25%, Example 7: area of 25 to 50%; Example 8: area of 0 to 90%, each from the end face on the gas inlet side).
At this time, the concentration of the alumina slurry was adjusted so that the amount of formation of the catalyst supporting layer per volume (1 liter) of the area in which the catalyst supporting layer was formed in the honeycomb filter was set to an amount shown in Table 2.
Here, the amount of formation was determined in such a manner that the amount of formation of the catalyst supporting layer was set to 20 g per volume (1 liter) of the entire honeycomb filter.

### (Comparative Examples 3 and 4)

The honeycomb filters were manufactured in the same manner as in Example 5. After that, upon forming a catalyst supporting layer, the depth to which each honeycomb filter was immersed in the slurry was changed to manufacture a honeycomb filter in which the catalyst supporting layers were formed on the respective areas shown in Table 1 (Comparative Example 3: area of 0 to 20% from the end face on the gas inlet side, Comparative Example 4: the entire area).
At this time, the concentration of the alumina slurry was adjusted so that the amount of formation of the catalyst supporting layer per volume (1 liter) of the area in which the catalyst supporting layer was formed in the honeycomb filter was set to an amount shown in Table 2.
Here, the amount of formation was determined in such a manner that the amount of formation of the catalyst supporting layer was set to 20 g per volume (1 liter) of the entire honeycomb filter.

With respect to each of the honeycomb filters manufactured in Examples 5 to 8 and Comparative Examples 3 and 4, measurements were carried out on the thermal conductivity and the regeneration limit value by the aforementioned methods.
Table 2 collectively shows the results of measurements of: the cell shape; the cell wall thickness; the formation range, the formation position and the amount of formation of the catalyst supporting layer; the thermal conductivity; and the regeneration limit value, of each of honeycomb filters manufactured in Examples 5 to 8 and Comparative Examples 3 and 4.

**[Table 2]**

| | Cell Shape | | Cell wall thickness | Catalyst supporting layer on inlet side | | | Thermal conductivity (W/mK) | | | Regeneration limit value (g/L) |
|---|---|---|---|---|---|---|---|---|---|---|
| | Cross-sectional shape | Cross sectional area ratio (Note 1) | (mm) | Formation range (%) | Formation position (%) | Amount of formation (g/L) | Inlet side | Outlet side | Ratio | |
| Example 5 | Octagonal shape + Tetragonal shape | 2.3 | 0.3 | 50 | 0-50 | 40.0 | 9.7 | 16.9 | 1.7 | 6.8 |
| Example 6 | Octagonal shape + Tetragonal shape | 2.3 | 0.3 | 25 | 0-25 | 80.0 | 6.0 | 16.9 | 2.8 | 6.1 |
| Example 7 | Octagonal shape + Tetragonal shape | 2.3 | 0.3 | 25 | 25-50 | 80.0 | 6.0 | 16.9 | 2.8 | 6.0 |
| Example 8 | Octagonal shape + Tetragonal shape | 2.3 | 0.3 | 90 | 0-90 | 22.2 | 12.0 | 16.9 | 1.4 | 6.7 |
| Comparative Example 3 | Octagonal shape + Tetragonal shape | 2.3 | 0.3 | 20 | 0-20 | 100.0 | 5.3 | 16.9 | 3.2 | 3.5 |
| Comparative Example 4 | Octagonal shape + Tetragonal shape | 2.3 | 0.3 | 100 | 0-100 | 20.0 | 12.5 | - | - | 3.3 |

| | | | | | | | | | | |
|---|---|---|---|---|---|---|---|---|---|---|
| (Note 1) Cross sectional area ratio = Cross sectional area of gas inlet cells / Cross sectional area of gas outlet cells | | | | | | | | | | |

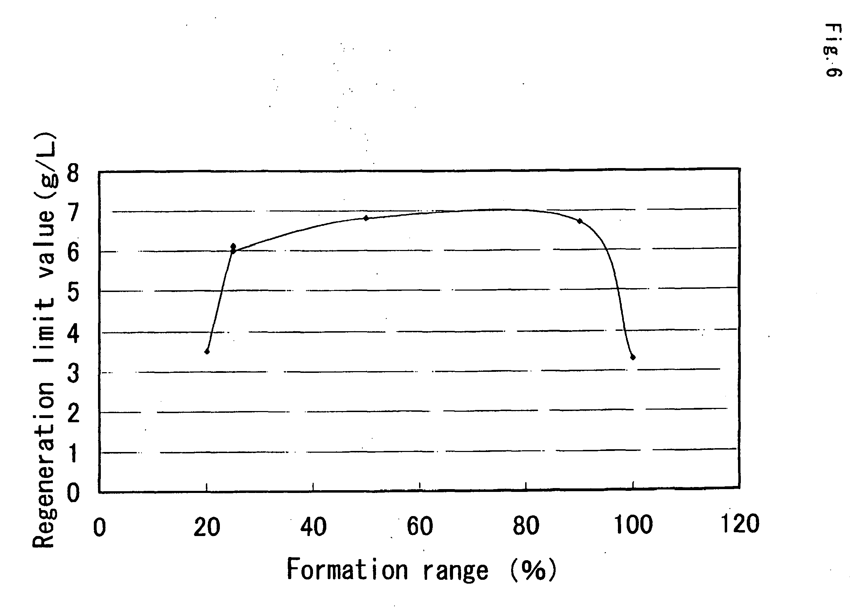

Fig. 6 is a graph that shows the relationship between the formation range of a catalyst supporting layer and the regeneration limit value with respect to each of honeycomb filters manufactured in Examples 5 to 8 and Comparative Examples 3 and 4.
As clearly indicated by the results shown in Table 2 and Fig. 6, by forming a catalyst supporting layer in an area covering 25% or more of the overall length of the honeycomb filter in the area of 90% of the overall length of the honeycomb filter from the end face on the gas inlet side, the regeneration limit value can be set to as high as 6.0 g/L or more. In contrast, in the case where the formation range of the catalyst supporting layer is as low as 20% (Comparative Example 3), or in the case where the catalyst supporting layer is formed over the entire honeycomb filter (Comparative Example 4), the regeneration limit value is reduced.

### (Example 9)

A honeycomb filter in which a platinum catalyst was supported on a catalyst supporting layer was manufactured in the same manner as in Example 1, except that a die was changed upon carrying out extrusion molding so as to manufacture a honeycomb fired body in which the cross sectional area of gas inlet cells was 3.0 times larger than the cross sectional area of gas outlet cells in Example 1.

### (Examples 10 to 12)

The honeycomb filters were manufactured in the same manner as in Example 9. After that, upon forming a catalyst supporting layer, the depth to which each honeycomb filter was immersed in the slurry was changed to manufacture a honeycomb filter in which the catalyst supporting layers were formed on the respective areas shown in Table 3 (Example 10: area of 0 to 25%, Example 11: area of 25 to 50%; Example 12: area of 0 to 90%, each from the end face on the gas inlet side).
At this time, the concentration of the alumina slurry was adjusted so that the amount of formation of the catalyst supporting layer per volume (1 liter) of the area in which the catalyst supporting layer was formed in the honeycomb filter was set to an amount shown in Table 3.
Here, the amount of formation was determined in such a manner that the amount of formation of the catalyst supporting layer was set to 20 g per volume (1 liter) of the entire honeycomb filter.

### (Comparative Examples 5 and 6)

The honeycomb filters were manufactured in the same manner as in Example 9. After that, upon forming a catalyst supporting layer, the depth to which each honeycomb filter was immersed in the slurry was changed to manufacture a honeycomb filter in which the catalyst supporting layers were formed on the respective areas shown in Table 3 (Comparative Example 5: area of 0 to 20% from the end face on the gas inlet side, Comparative Example 6: the entire area).
At this time, the concentration of the alumina slurry was adjusted so that the amount of formation of the catalyst supporting layer per volume (1 liter) of the area in which the catalyst supporting layer was formed in the honeycomb filter was set to an amount shown in Table 3.
Here, the amount of formation was determined in such a manner that the amount of formation of the catalyst supporting layer was set to 20 g per volume (1 liter) of the entire honeycomb filter.

With respect to each of the honeycomb filters manufactured in Examples 9 to 12 and Comparative Examples 5 and 6, measurements were carried out on the thermal conductivity and the regeneration limit value by the aforementioned methods.
Table 3 collectively shows the results of measurements of: the cell shape; the cell wall thickness; the formation range, the formation position and the amount of formation of the catalyst supporting layer; the thermal conductivity; and the regeneration limit value, of each of honeycomb filters manufactured in Examples 9 to 12 and Comparative Examples 5 and 6.

**[Table 3]**

| | Cell Shape | | Cell wall thickness | Catalyst supporting layer on Inlet side | | | Thermal conductivity (W/mK) | | | Regeneration limit value (g/L) |
|---|---|---|---|---|---|---|---|---|---|---|
| | Cross-sectional shape | Cross sectional area ratio (Note 1) | (mm) | Formation range (%) | Formation position (%) | Amount of formation (g/L) | Inlet side | Outlet side | Ratio | |
| Example 9 | Octagonal shape + Tetragonal shape | 3.0 | 0.3 | 50 | 0-50 | 40.0 | 9.7 | 16.9 | 1.7 | 6.5 |
| Example 10 | Octagonal shape + Tetragonal shape | 3.0 | 0.3 | 25 | 0-25 | 80.0 | 6.0 | 16.9 | 2.8 | 6.0 |
| Example 11 | Octagonal shape + Tetragonal shape | 3.0 | 0.3 | 25 | 25-50 | 80.0 | 6.0 | 16.9 | 2.8 | 6.0 |
| Example 12 | Octagonal shape + Tetragonal shape | 3.0 | 0.3 | 90 | 0-90 | 22.2 | 12.0 | 16.9 | 1.4 | 6.2 |
| Comparative Example 5 | Octagonal shape + Tetragonal shape | 3.0 | 0.3 | 20 | 0-20 | 100.0 | 5.3 | 16.9 | 3.2 | 3.3 |
| Comparative Example 6 | Octagonal shape + Tetragonal shape | 3.0 | 0.3 | 10 | 0-10 | 20.0 | 12.5 | - | - | 3.1 |

| | | | | | | | | | | |
|---|---|---|---|---|---|---|---|---|---|---|
| (Note 1) Cross sectional area ratio = Cross sectional area of gas inlet cells / Cross sectional area of gas outlet cells | | | | | | | | | | |

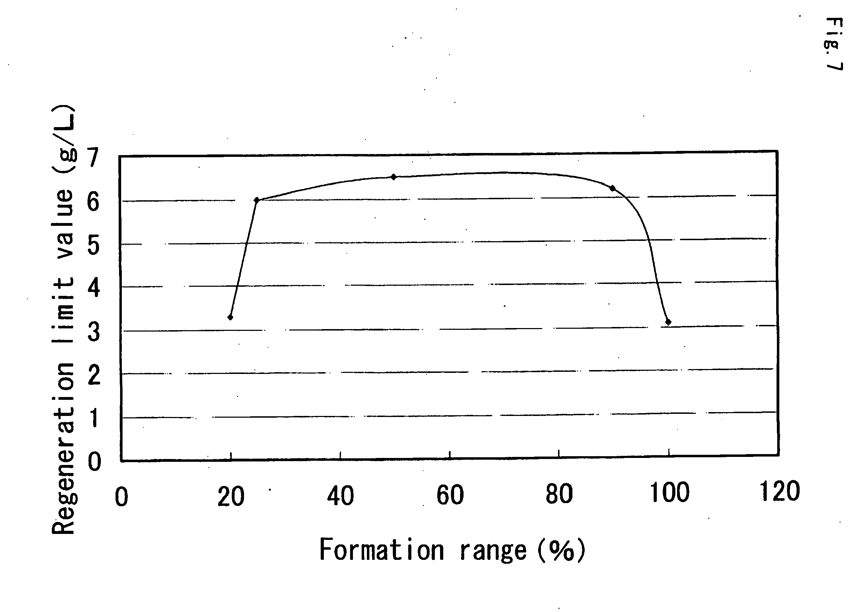

Fig. 7 is a graph that shows the relationship between the formation range of a catalyst supporting layer and the regeneration limit value with respect to each of honeycomb filters manufactured in Examples 9 to 12 and Comparative Examples 5 and 6.
As clearly indicated by the results shown in Table 3 and Fig. 7, by forming a catalyst supporting layer in an area covering 25% or more of the overall length of the honeycomb filter in the area of 90% of the overall length of the honeycomb filter from the end face on the gas inlet side, the regeneration limit value can be set to as high as 6.0 g/L or more. In contrast, in the case where the formation range of the catalyst supporting layer is as low as 20% (Comparative Example 5), or in the case where the catalyst supporting layer is formed over the entire honeycomb filter (Comparative Example 6), the regeneration limit value is reduced.

In accordance with the results indicated by Examples 1 to 12 and Comparative Examples 1 to 6, it is confirmed that the honeycomb filter of the present embodiment is provided with a high regeneration limit value.

### (Second Embodiment)

The following description will discuss a second embodiment that is another embodiment of the present invention.
In the honeycomb filter in accordance with the present embodiment, the sum of the cross sectional areas of gas inlet cells is 1.5 to 3.0 times larger than the sum of the cross sectional areas of gas outlet cells.
Moreover, the specific cross-sectional shape of each cell is not limited to the shape in which, as described in the first embodiment, the cross-sectional shape of each gas inlet cell is an octagonal shape and the cross-sectional shape of each gas outlet cell is a tetragonal shape, but may have any shape as long as the sum of the cross sectional areas of gas inlet cells is 1.5 to 3.0 times larger than the sum of the cross sectional areas of gas outlet cells.

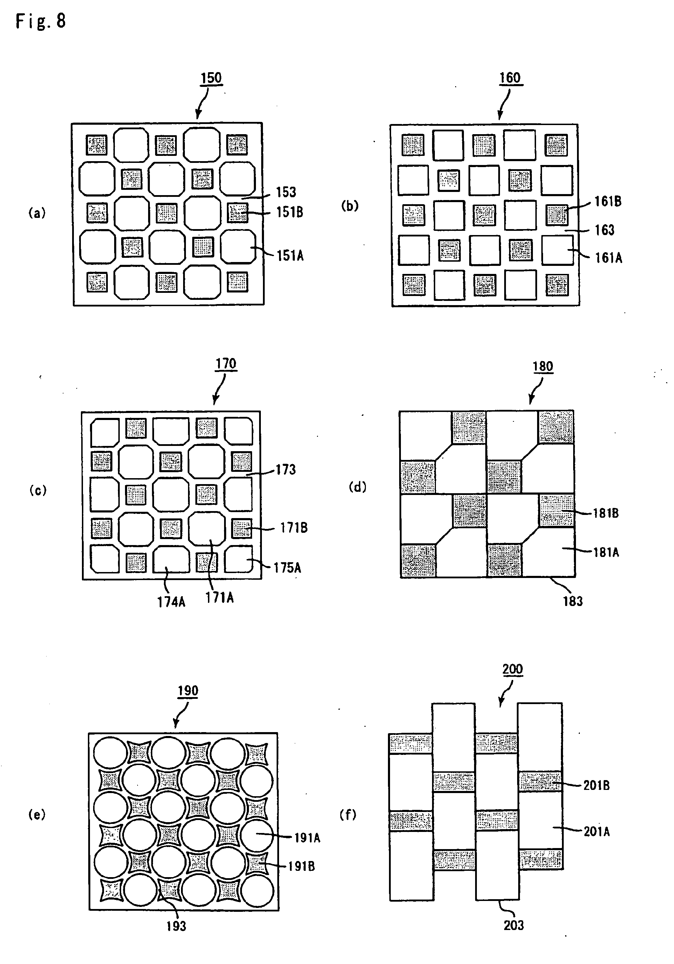

More specifically, for example, cross-sectional shapes as shown in Figs. 8(a) to 8(f) are exemplified.
Figs. 8(a) to 8(f) are schematic drawings each of which shows a cross section perpendicular to the longitudinal direction of the honeycomb fired body forming a honeycomb filter of the present invention.

In the same manner as the honeycomb fired body shown in Figs. 2(a) and 2(b), a honeycomb fired body 150 shown in Fig. 8(a) has gas inlet cells 151A each having an octagonal shape in its cross section, and gas outlet cells 151B each having a tetragonal shape in its cross section, and the cross sectional area of each gas inlet cell 151A is 2.8 times larger than the cross sectional area of each gas outlet cell 151B.
Here, in Fig. 8(a), reference numeral 153 represents a cell wall.

A honeycomb fired body 160 shown in Fig. 8 (b) has gas inlet cells 161A each having a tetragonal shape in its cross section, and gas outlet cells 161B each having a tetragonal shape in its cross section, and the cross sectional area of each gas inlet cell 161A is 1.8 times larger than the cross sectional area of each gas outlet cell 161B.
Here, in Fig. 8(b), reference numeral 163 represents a cell wall.

A honeycomb fired body 170 shown in Fig. 8(c) has four kinds of cells having different cross-sectional shapes, that is, gas outlet cells 171B each having a tetragonal shape in its cross section, gas inlet cells 174A and 175A each having a hexagonal shape in its cross section, and gas inlet cells 171A each having an octagonal shape in its cross section, and the respective cells are placed in such a manner that a cell wall 173 having the same thickness is interposed therebetween. In this honeycomb fired body 170, the cross sectional area of each gas inlet cell is 1. 8 to 2. 8 times larger than the cross sectional area of each gas outlet cell.

In a honeycomb fired body 180 shown in Fig. 8(d), each of the cross sectional shapes of gas inlet cells 181A is a pentagonal shape, with its three angles allowed to form virtually right angles. On the other hand, the cross sectional shape of each of the gas outlet cells 181B is a quadrangle, and the gas outlet cells are allowed to respectively occupy portions that diagonally face each other in a larger tetragonal shape. In this case, the cross sectional area of each gas inlet cell 181A is 2.1 times larger than the cross sectional area of each gas outlet cell 181B.
Here, in Fig. 8(d), reference numeral 183 represents a cell wall.

A honeycomb fired body 190 shown in Fig. 8(e) has a cross-sectional shape obtained by modifying the cross-sectional shape shown in Fig. 8(a), and this shape is obtained by convexly warping the cell walls commonly possessed by the gas inlet cells 191A and the gas outlet cells 191B, respectively, with a certain curvature toward the gas outlet cells. Here, the cross sectional area of the gas inlet cell 191A is 3.0 times larger than the cross sectional area of the gas outlet cell 191B.
In Fig. 8(e), reference numeral 193 represents a cell wall.

A honeycomb fired body 200 shown in Fig. 8(f) has a rectangular structural unit in which the respective gas inlet cells 201A and the respective gas outlet cells 201B, each of which has a tetragonal shape (rectangular shape), are placed to be adjacent to each other longitudinally, and the structural units are continuously connected longitudinally, and placed in a staggered manner in the lateral direction. Here, the cross sectional area of the gas inlet cell 201A is 2.9 times larger than the cross sectional area of the gas outlet cell 201B.
In Fig. 8(f), reference numeral 203 represents a cell wall.

As described above, in the honeycomb filter of the present invention, it is only necessary that the sum of the cross sectional areas of the gas inlet cells be 1.5 to 3.0 times larger than the sum of the cross sectional areas of the gas outlet cells.

Here, the honeycomb filters of the present invention having the shapes of the cells shown in Figs. 8(a) to 8(f) can be manufactured by using the same method as the method for manufacturing the honeycomb filter of the first embodiment, except that the extrusion-molding die is properly selected depending on the shape of the cells.

The honeycomb filters of the present embodiment can also exert the same functional effects (1) to (3) as those of the honeycomb filter of the first embodiment.

The following description will discuss Examples that more specifically disclose the second embodiment of the present invention; however, the present invention is not intended to be limited only by these Examples.

### (Example 13)

A honeycomb filter, in which a platinum catalyst was supported on a catalyst supporting layer, was manufactured in the same manner as in Example 5, except that a die was changed upon extrusion-molding in Example 5 so as to manufacture a honeycomb fired body having a structure in which the shapes of cells are obtained by convexly warping the cell walls commonly possessed by the gas inlet cells and the gas outlet cells, respectively, with a certain curvature toward the gas outlet cells as shown in Fig. 8(e), and the cross sectional area of the gas inlet cells is 2.3 times larger than the cross sectional area of the gas outlet cells.

### (Example 14)

A honeycomb filter, in which a platinum catalyst was supported on a catalyst supporting layer, was manufactured in the same manner as in Example 5, except that a die was changed upon extrusion-molding in Example 5 so as to manufacture a honeycomb fired body having a structure having a rectangular structural unit in which the respective gas low-in cells and the respective gas outlet cells, each of which has a rectangular shape, are placed to be adjacent to each other longitudinally, and the structural units are continuously connected longitudinally, and placed in a staggered manner in the lateral direction as shown in Fig. 8(f), and the cross sectional areas of the gas inlet cells was 2.3 times larger than the cross sectional areas of the gas outlet cells.

### (Comparative Example 7)

A honeycomb filter, in which a platinum catalyst was supported on a catalyst supporting layer in an area covering to 0 to 50% from the end face on the gas inlet side, was manufactured in the same manner as in Example 1, except that upon manufacturing a honeycomb fired body, a honeycomb fired body in which all the cells had the same square cross-sectional shape was formed.

### (Comparative Example 8)

A honeycomb filter, in which a platinum catalyst was supported on a catalyst supporting layer in an area covering to 0 to 90% from the end face on the gas inlet side, was manufactured in the same manner as in Example 4, except that upon manufacturing a honeycomb fired body, a honeycomb fired body in which all the cells had the same square cross-sectional shape was formed.

### (Comparative Example 9)

A honeycomb filter, in which a platinum catalyst was supported on a catalyst supporting layer, was manufactured in the same manner as in Example 1, except that upon extrusion-molding in Example 1, a die was changed so as to manufacture a honeycomb fired body in which the cross sectional area of the gas inlet cells was 3.5 times larger than the cross sectional area of the gas outlet cells.

### (Comparative Example 10)

A honeycomb filter, in which a platinum catalyst was supported on a catalyst supporting layer, was manufactured in the same manner as in Example 4, except that upon extrusion-molding in Example 4, a die was changed so as to manufacture a honeycomb fired body in which the cross sectional area of the gas inlet cells was 3.5 times larger than the cross sectional area of the gas outlet cells.

With respect to each of the honeycomb filters manufactured in Examples 13 and 14, and Comparative Examples 7 to 10, measurements were carried out on the thermal conductivity and the regeneration limit value according to the aforementioned methods.
Table 4 collectively shows the results of measurements of: the cell shape; the cell wall thickness; the formation range, the formation position and the amount of formation of the catalyst supporting layer; the thermal conductivity; and the regeneration limit value, of each of honeycomb filters manufactured in Examples 13, 14 and Comparative Examples 7 to 10.
Moreover, for reference, Table 4 additionally shows the results of measurements of the cell shape, the cell wall thickness, the formation range, the formation position and the amount of formation of the catalyst supporting layer, the thermal conductivity, and the regeneration limit value, of each of honeycomb filters manufactured in Examples 1, 4, 5, 8, 9 and 12.

**[Table 4]**

| | Cell Shape | | Cell wall thickness | Catalyst supporting layer on inlet side | | | Thermal conductivity (W/mK) | | | Regeneration limit value (g/L) |
|---|---|---|---|---|---|---|---|---|---|---|
| | Cross-sectional shape | Cross sectional area ratio (Note 1) | (mm) | Formation range (%) | Formation position (%) | Amount of formation (g/L) | Inlet side | Outlet side | Ratio | |
| Example 1 | Octagonal shape + Tetragonal shape | 1.5 | 0.3 | 50 | 0-50 | 40.0 | 9.7 | 16.9 | 1.7 | 6.6 |
| Example 4 | Octagonal shape + Tetragonal shape | 1.5 | 0.3 | 90 | 0-90 | 22.2 | 12.0 | 16.9 | 1.4 | 6.4 |
| Example 5 | Octagonal shape + Tetragonal shape | 2.3 | 0.3 | 50 | 0-50 | 40.0 | 9.7 | 16.9 | 1.7 | 6.8 |
| Example 8 | Octagonal shape + Tetragonal shape | 2.3 | 0.3 | 90 | 0-90 | 22.2 | 12.0 | 16.9 | 1.4 | 6.7 |
| Example 13 | Fig. 8(e) | 2.3 | 0.3 | 50 | 0-50 | 40.0 | 9.7 | 16.9 | 1.7 | 6.4 |
| Example 14 | Fig. 8(f) | 2.3 | 0.3 | 50 | 0-50 | 40.0 | 9.7 | 16.9 | 1.7 | 6.2 |
| Example 9 | Octagonal shape + Tetragonal shape | 3.0 | 0.3 | 50 | 0-50 | 40.0 | 9.7 | 16.9 | 1.7 | 6.5 |
| Example 12 | Octagonal shape + Tetragonal shape | 3.0 | 0.3 | 90 | 0-90 | 22.2 | 12.0 | 16.9 | 1.4 | 6.2 |
| Comparative Example 9 | Octagonal shape + Tetragonal shape | 3.5 | 0.3 | 50 | 0-50 | 40.0 | 9.7 | 16.9 | 1.7 | 5.7 |
| Comparative Example 10 | Octagonal shape + Tetragonal shape | 3.5 | 0.3 | 90 | 0-90 | 22.2 | 12.0 | 16.9 | 1.4 | 5.6 |
| Comparative Example 7 | Identical square shape | 1.0 | 0.3 | 50 | 0-50 | 40.0 | 9.7 | 16.9 | 1.7 | 4.8 |
| Comparative Example 8 | Identical square shape | 1.0 | 0.3 | 90 | 0-90 | 22.2 | 12.0 | 16.9 | 1.4 | 4.5 |

| | | | | | | | | | | |
|---|---|---|---|---|---|---|---|---|---|---|
| (Note 1) Cross sectional area ratio = Cross sectional area of gas inlet cells / Cross sectional area of gas outlet cells | | | | | | | | | | |

As clearly indicated by the results shown in Table 4, by setting the sum of the cross sectional areas of gas inlet cells to 1.5 to 3.0 times larger than the sum of the cross sectional areas of gas outlet cells, the regeneration limit value can be increased to as high as 6.0 g/L or more.
In contrast, in the case where the sum of the cross sectional areas of gas inlet cells is less than 1.5 times larger, or more than 3.0 times larger, than the sum of the cross sectional areas of gas outlet cells, the regeneration limit value of the honeycomb filter is reduced.

### (Third Embodiment)

The following description will discuss a third embodiment that is still another embodiment of the present invention.
In a honeycomb filter in accordance with the present embodiment, an area supporting no catalyst supporting layer has a thermal conductivity that is 1.3 to 5.0 times higher than the thermal conductivity of the area in which the catalyst supporting layer is formed.
Here, the thermal conductivity of each of the area in which no catalyst supporting layer is formed and the area in which a catalyst supporting layer is formed is measured in the following manner, that is, as shown in Fig. 2 (b), one portion of the area of cell walls 113 on which the catalyst supporting layer was formed was cut out as a sample portion 31 for measuring a thermal conductivity on the gas inlet side, and one portion thereof in which no catalyst supporting layer was formed was cut out as a sample portion 32 for measuring a thermal conductivity on the gas outlet side so that the thermal conductivity of each of the sample portions for measuring the thermal conductivity is measured.

In the honeycomb filter in accordance with the present embodiment, since an area supporting no catalyst supporting layer has a thermal conductivity that is 1.3 to 5.0 times higher than the thermal conductivity of the area supporting the catalyst supporting layer, it is possible to restrain a thermal impact that is caused by the temperature difference between the gas inlet side and the gas outlet side of the honeycomb filter, and consequently to provide a high regeneration limit value. Moreover, the honeycomb filter of the present embodiment as well can exert the same functional effects (1) to (3) as those of the honeycomb filter of the first embodiment.

### (Other Embodiments)

In the structure of the honeycomb filter of the present invention, the cross sectional area of each of the gas inlet cells is not necessarily required to be 1.5 to 3.0 times larger than the cross sectional area of each of the gas inlet cells like the first to third embodiments, as long as the sum of the cross sectional areas of the gas outlet cells is 1.5 to 3. 0 times larger than the sum of the cross sectional areas of the gas inlet cells. The structure of the honeycomb filter of the present invention may also be a structure in which the cross sectional areas of all the cells are identical to one another, and each of the cells is sealed in such a manner that the sum of the cross sectional areas of the cells having openings on the gas inlet side is 1.5 to 3.0 times larger than the sum of the cross sectional areas of the cells having openings on the gas outlet side.

The structure of the honeycomb filter of the present invention is not limited to the structure in which a plurality of honeycomb fired bodies are bonded to one another by interposing a sealing material layer (adhesive layer), and may be a structure configured with a single honeycomb fired body.

Upon manufacturing such a honeycomb filter configured with a single honeycomb fired body, the same method as in the first embodiment is used, except that the size and the shape of a honeycomb molded body to be molded through an extrusion-molding process are made virtually the same as those of a honeycomb filter so that a honeycomb fired body is manufactured. Thereafter, if necessary, a sealing material layer (coat layer) is formed on the periphery of the honeycomb fired body, and formation of a catalyst supporting layer and supporting of a catalyst are further carried out thereon.

With respect to the shape of the honeycomb filter of the present invention, it is not particularly limited to the round pillar shape shown in Fig. 1, and the honeycomb filter may have any desired pillar shape, such as a cylindroid shape and a rectangular pillar shape.

The porosity of the honeycomb filter of the present invention is desirably 30 to 70%.
This structure makes it possible to maintain sufficient strength in the honeycomb filter and to maintain a low level resistance at the time of passage of exhaust gases through the cell walls.
In contrast, the porosity of less than 30% tends to cause clogging in the cell walls in an early stage, while the porosity of more than 70% tends to cause a decrease in strength of the honeycomb filter with the result that the honeycomb filter might be easily broken.
Here, the porosity can be measured through conventionally known methods, such as a mercury injection method, Archimedes method, and a measuring method using a scanning electronic microscope (SEM).

The cell density on a cross section perpendicular to the longitudinal direction of the honeycomb filter is not particularly limited. However, a desirable lower limit is 31.0 pcs/cm² (200 pcs/in²) and a desirable upper limit is 93 pcs/cm² (600 pcs/in²). Amore desirable lower limit is 38.8 pcs/cm² (250 pcs/in²) and a more desirable upper limit is 77.5 pcs/cm² (500 pcs/in²).

The main component of constituent materials of the honeycomb filter is not limited to silicon carbide, and may include: a nitride ceramic such as aluminum nitride, silicon nitride, boron nitride, and titanium nitride; a carbide ceramic such as zirconium carbide, titanium carbide, tantalum carbide, and tungsten carbide; a complex of a metal and a nitride ceramic; and a complex of a metal and a carbide ceramic.
Moreover, the main component of constituent materials also include a silicon-containing ceramic prepared by compounding a metal silicon into the above-mentioned ceramics and a ceramic material such as a ceramic bonded by a silicon or a silicate compound. Furthermore, cordierite, aluminum titanate or the like may be used as the main component of constituent materials.

In the case of honeycomb filter formed by a plurality of honeycomb fired bodies bonded to one another by interposing a sealing material layer (adhesive layer) therebetween, as described in the first, second and third embodiments, silicon carbide is particularly preferably used as the main component of the constituent materials of the honeycomb filter, because silicon carbide is excellent in heat resistant property, mechanical strength, thermal conductivity and the like. Moreover, a material prepared by compounding metal silicon with silicon carbide (silicon-containing silicon carbide) is also desirable.
Furthermore, in the case of a honeycomb filter configured by a single honeycomb fired body, the main component of the constituent material is desirably cordierite or aluminum titanate.

Although the particle diameter of silicon carbide powder used upon preparation of the wet mixture is not particularly limited, it is desirable to use the silicon carbide powder that tends not to cause the case where the size of the honeycomb structured body manufactured by the following firing treatment becomes smaller than that of the honeycomb molded body. For example, it is preferable to use 100 parts by weight of the powder having an average particle diameter of 1.0 to 50.0 µm and 5 to 65 parts by weight of the powder having an average particle diameter of 0.1 to 1.0 µm.
By adjusting the particle diameter of the silicon carbide powder in the aforementioned range, the pore diameter of the honeycomb fired body can be properly adjusted. On the other hand, the pore diameter of the honeycomb fired body can be also adjusted by regulating the firing temperature.

The organic binder in the wet mixture is not particularly limited, and examples thereof include carboxymethyl cellulose, hydroxyethyl cellulose, polyethylene glycol, and the like. Out of these, methylcellulose is more desirably used. In general, the compounding amount of the organic binder is desirably 1 to 10 parts by weight with respect to 100 parts by weight of the silicon carbide powder and the like.

A plasticizer and a lubricant to be used upon preparing the wet mixture are not particularly limited, and for example, glycerin or the like may be used as the plasticizer. Moreover, as the lubricant, for example, polyoxyalkylene-based compounds, such as polyoxyethylene alkyl ether, polyoxypropylene alkyl ether and the like, may be used.
Specific examples of the lubricant include polyoxyethylene monobutyl ether, polyoxypropylene monobutyl ether, and the like.
Here, the plasticizer and the lubricant are not necessarily contained in the wet mixture depending on cases.

Upon preparing the wet mixture, a dispersant solution may be used, and examples of the dispersant solution include water, an organic solvent such as benzene, alcohol such as methanol, and the like.
Moreover, a molding auxiliary may be added to the wet mixture.
The molding auxiliary is not particularly limited, and examples thereof include ethylene glycol, dextrin, fatty acid, fatty acid soap, polyalcohol, and the like.

Furthermore, a pore-forming agent, such as balloons that are fine hollow spheres comprising an oxide-based ceramic, spherical acrylic particles, and graphite may be added to the wet mixture, if necessary.
With respect to the balloons, not particularly limited, for example, alumina balloons, glass micro-balloons, shirasu balloons, fly ash balloons (FA balloons), mullite balloons, and the like may be used. Out of these, alumina balloons are more desirably used.

Moreover, the content of organic components in the wet mixture is desirably 10% by weight or less, and the content of moisture is desirably 8 to 30% by weight.

Although a plug material paste used for sealing cells is not particularly limited, the plug material paste that allows the plugs manufactured through post processes to have a porosity of 30 to 75% is desirably used. For example, the same material as that of the wet mixture may be used.

Examples of the inorganic binder in the plug material paste include silica sol, alumina sol and the like. Each of these may be used alone or two or more kinds of these may be used in combination. Silica sol is more desirably used among the inorganic binders.

Examples of the organic binder in the plug material paste include polyvinyl alcohol, methyl cellulose, ethyl cellulose, carboxymethyl cellulose, and the like. Each of these may be used alone or two or more kinds of these may be used in combination. Carboxymethyl cellulose is more desirably used among the organic binders.

Examples of the inorganic fibers in the plug material paste include ceramic fibers and the like made from silica-alumina, mullite, alumina, silica or the like. Each of these may be used alone or two or more kinds of these may be used in combination. Alumina fibers are more desirably used among the inorganic fibers.

Examples of the inorganic particles in the plug material paste include carbides, nitrides, and the like, and specific examples thereof include inorganic powder and the like made from silicon carbide, silicon nitride, boron nitride, and the like. Each of these may be used alone, or two or more kinds of these may be used in combination. Out of the inorganic particles, silicon carbide is desirably used due to its superior thermal conductivity.

Furthermore, a pore-forming agent, such as balloons that are fine hollow spheres comprising an oxide-based ceramic, spherical acrylic particles, and graphite may be added to the plug material paste, if necessary. The balloons are not particularly limited, and for example, alumina balloons, glass micro-balloons, shirasu balloons, fly ash balloons (FA balloons), mullite balloons, and the like may be used. Out of these, alumina balloons are more desirably used.

With respect to the material forming the catalyst supporting layer, the material having a high specific surface area and capable of highly dispersing the catalyst to support the catalyst thereon is desirably used, and examples thereof include an oxide ceramic such as alumina, titania, zirconia, silica, and the like. These materials may be used alone, or two or more kinds of these may be used in combination.
Out of these, the materials having a high specific surface area of 250 m²/g or more is desirably selected, and γ-alumina is particularly desirable.

Further, the method for forming the catalyst supporting layer made from above-mentioned alumina is not particularly limited to the method explained in the first embodiment. For example, a method may be used in which a honeycomb filter is immersed in a metal compound solution containing aluminum such as an aqueous solution of aluminum nitrate so that the cell walls are coated with an alumina film (layer) through a sol-gel method, and the resulting honeycomb filter is dried and fired.

With respect to the catalyst to be supported on the surface of the catalyst supporting layer, for example, noble metals such as platinum, palladium, and rhodium are desirably used. Out of these, platinum is more preferably used. Moreover, with respect to other catalysts, alkali metals such as potassium, sodium, and the like, or alkali-earth metals such as barium may be used. Each of these catalysts may be used alone, or two or more kinds of these may be used in combination.

### BRIEF DESCRIPTION OF THE DRAWINGS

Fig. 1 is a perspective view schematically showing one example of a honeycomb filter of the present invention.
Fig. 2 (a) is a perspective view schematically showing one example of a honeycomb fired body forming a honeycomb filter of the present invention, and Fig. 2(b) is a cross-sectional view taken along the line A-A of the Fig. 2(a).
Figs. 3(a) to 3(d) are cross-sectional views schematically showing examples of areas with the catalyst supporting layer being formed therein, in honeycomb fired bodies that form a honeycomb filter of the first embodiment of the present invention.
Fig. 4 is a cross-sectional view showing an exhaust gas purifying apparatus used upon measuring a regeneration limit value.
Fig. 5 is a graph showing the relationship between the formation range of a catalyst supporting layer and the regeneration limit value of each of honeycomb filters manufactured in Examples 1 to 4 and Comparative Examples 1 and 2.
Fig. 6 is a graph showing the relationship between the formation range of a catalyst supporting layer and the regeneration limit value of each of honeycomb filters manufactured in Examples 5 to 8 and Comparative Examples 3 and 4.
Fig. 7 is a graph showing the relationship between the formation range of a catalyst supporting layer and the regeneration limit value of each of honeycomb filters manufactured in Examples 9 to 12 and Comparative Examples 5 and 6.
Figs. 8(a) to 8(f) are schematic views each showing a cross section perpendicular to the longitudinal direction of a honeycomb fired body forming the honeycomb filter of the present invention.

### EXPLANATION OF SYMBOLS

- 10, 20, 30, 40: Catalyst supporting layer
- 21: End face on the gas inlet side
- 22: End face on the gas outlet side
- 100: Honeycomb filter
- 110, 120, 130, 140: Honeycomb fired body
- 111: Cell
- 112: Plug
- 113: Cell wall
- G: Exhaust gases

## Claims

1. A honeycomb filter comprising a pillar-shaped honeycomb fired body having a large number of cells each sealed at either end thereof and placed longitudinally in parallel with one another with a cell wall therebetween, and allowing gases to flow into one of the end face sides and to flow out from the other end face side,
wherein
the sum of the cross sectional areas perpendicular to the longitudinal direction of cells having openings on the gas inlet side is 1.5 to 3.0 times larger than the sum of the cross sectional areas perpendicular to the longitudinal direction of cells having openings on the gas outlet side;
no catalyst supporting layer is formed in an area covering 10% of the overall length of said honeycomb filter from said gas outlet side;
a catalyst supporting layer is formed in an area covering 25 to 90% of the overall length of said honeycomb filter in an area of 90% of the overall length from said gas inlet side; and
a thermal conductivity of the area in which no catalyst supporting layer is formed is higher than a thermal conductivity of the area in which said catalyst supporting layer is formed in said honeycomb filter.

2. The honeycomb filter according to claim 1,
wherein
a catalyst is supported on said catalyst supporting layer.

3. The honeycomb filter according to claim 1 or claim 2,
wherein
the thermal conductivity of the area in which no catalyst supporting layer is formed is 1.3 to 5.0 times higher than the thermal conductivity of the area in which said catalyst supporting layer is formed in said honeycomb filter.

4. The honeycomb filter according to any of claims 1 to 3,
wherein
a main component of said honeycomb filter comprises one member selected from the group consisting of a carbide ceramic, a nitride ceramic, a complex of a metal and a carbide ceramic, and a complex of a metal and a nitride ceramic.

5. The honeycomb filter according to claim 4,
wherein
a main component of said honeycomb filter comprises silicon carbide.

## Patentansprüche

1. Wabenfilter, der einen säulenförmigen gebrannten Wabenkörper mit einer grossen Anzahl an Zellen umfasst, die an ihren beiden Enden versiegelt sind und in Längsrichtung parallel zueinander mit einer Zellwand dazwischen angeordnet sind, und es ermöglicht, dass Gase in eine der Endflächenseiten hineinströmt und aus der anderen Endflächenseite herausströmt,
worin
die Summe der Querschnittsflächen senkrecht zur Längsrichtung der Zellen mit Öffnungen an der Gaseinlasseite 1,5 bis 3,0 mal grösser ist als die Summe der Querschnittsflächen senkrecht zur Längsrichtung der Zellen mit Öffnungen an der Gasauslasseite,
keine Katalysatorträgerschicht in einem Bereich gebildet ist, der 10 % der Gesamtlänge des Wabenfilters, von der Gasauslasseite ausgehend, abdeckt,
eine Katalysatorträgerschicht in einem Bereich gebildet ist, der 25 bis 90 % der Gesamtlänge des Wabenfilters in einem Bereich von 90 % der Gesamtlänge, ausgehend von der Gaseinlasseite, abdeckt, und
die Wärmeleitfähigkeit in dem Bereich, in dem keine Katalysatorträgerschicht gebildet ist, höher als die Wärmeleitfähigkeit des Bereichs ist, in dem die Katalysatorträgerschicht im Wabenfilter gebildet ist.

2. Wabenfilter gemäss Anspruch 1, worin ein Katalysator auf der Katalysatorträgerschicht getragen wird.

3. Wabenfilter gemäss Anspruch 1 oder 2, worin die Wärmeleitfähigkeit des Bereichs, in dem keine Katalysatorträgerschicht gebildet ist, 1,3 bis 5,0 mal höher ist als die Wärmeleitfähigkeit des Bereichs, in dem die Katalysatorträgerschicht im Wabenfilter gebildet ist.

4. Wabenfilter gemäss mindestens einem der Ansprüche 1 bis 3, worin eine Hauptkomponente des Wabenfilters ein Mitglied umfasst, das aus der Gruppe ausgewählt wird, die aus einer Carbidkeramik, einer Nitridkeramik, einem Komplex aus einem Metall und einer Carbidkeramik und einem Komplex aus einem Metall und einer Nitridkeramik besteht.

5. Wabenfilter gemäss Anspruch 4, worin eine Hauptkomponente des Wabenfilters Siliciumcarbid umfasst.

## Revendications

1. Filtre en nid d'abeilles comprenant un corps cuit en nid d'abeilles sous forme de pilier qui possède un grand nombre de cellules chacune scellée aux deux extrémités correspondantes et placée longitudinalement l'une parallèlement à l'autre avec une paroi cellulaire entre celles-ci, et permettant à des gaz de circuler dans l'un des côtés de la face extrême et de sortir de l'autre côté de la face extrême,
dans lequel
la somme des superficies en coupe transversale perpendiculaires à la direction longitudinale des cellules ayant des ouvertures sur le côté d'entrée des gaz est 1,5 à 3,0 fois supérieure à la somme des superficies en coupe transversale perpendiculaires à la direction longitudinale des cellules ayant des ouvertures sur le côté de sortie des gaz;
aucune couche de support de catalyseur n'est formée dans une zone couvrant 10% de la longueur totale dudit filtre en nid d'abeilles en partant dudit côté de sortie des gaz;
une couche de support de catalyseur est formée dans une zone couvrant 25 à 90% de la longueur totale dudit filtre en nid d'abeilles dans une zone de 90% de la longueur totale en partant dudit côté d'entrée des gaz; et
une conductivité thermique de la zone dans laquelle aucune couche de support de catalyseur n'est formée est plus élevée qu'une conductivité thermique de la zone dans laquelle ladite couche de support de catalyseur est formée dans ledit filtre en nid d'abeilles.

2. Filtre en nid d'abeilles selon la revendication 1,
dans lequel
un catalyseur est soutenu sur ladite couche de support de catalyseur.

3. Filtre en nid d'abeilles selon la revendication 1 ou la revendication 2, dans lequel
la conductivité thermique de la zone dans laquelle aucune couche de support de catalyseur n'est formée est 1,3 à 5,0 fois plus élevée que la conductivité thermique de la zone dans laquelle ladite couche de support de catalyseur est formée dans ledit filtre en nid d'abeilles.

4. Filtre en nid d'abeilles selon l'une des revendications 1 à 3, dans lequel
un composant principal dudit filtre en nid d'abeilles comprend un élément sélectionné parmi le groupe se composant de céramique de carbure, céramique de nitrure, d'un complexe d'un métal et d'une céramique de carbure, et d'un complexe d'un métal et d'une céramique de nitrure.

5. Filtre en nid d'abeilles selon la revendication 4, dans lequel
un composant principal dudit filtre en nid d'abeilles comprend du carbure de silicium.
